# EUROPÄISCHE PATENTSCHRIFT

(11) **EP 3 679 615 B1**
(45) Veröffentlichungstag und Bekanntmachung des Hinweises auf die Patenterteilung: **21.04.2021**
(21) Anmeldenummer: 18765005.6
(22) Anmeldetag: 08.08.2018
(51) Int. Cl.: H01M 8/0273, H01M 8/0286, H01M 8/1004, H01M 8/0284

(54) **BAUGRUPPE FÜR EINEN BRENNSTOFFZELLENSTAPEL, BRENNSTOFFZELLENSTAPEL UND VERFAHREN ZUR HERSTELLUNG DER BAUGRUPPE**
SUBASSEMBLY FOR A FUEL CELL STACK, FUEL CELL STACK AND METHOD FOR PRODUCING THE SUBASSEMBLY
MODULE DE CONSTRUCTION POUR UN EMPILEMENT DE PILES A COMBUSTIBLE, EMPILEMENT DE PILES A COMBUSTIBLE ET PROCEDE DE PRODUCTION DU MODULE DE CONSTRUCTION

(30) Priorität: 05.09.2017 DE 102017215504
(43) Veröffentlichungstag der Anmeldung: 15.07.2020
(73) Patentinhaber: Audi AG, 85045 Ingolstadt (DE); Volkswagen AG, 38440 Wolfsburg (DE)
(72) Erfinder: GALLAGHER, Emerson R., Burnaby, British Columbia V5J 5J8 (CA)
(86) Internationale Anmeldenummer: PCT/EP2018/071476
(87) Internationale Veröffentlichungsnummer: WO 2019/048166

(56) Entgegenhaltungen:
- JP-A- 2007 066 766
- US-A1- 2015 030 960
- US-A1- 2015 357 656

## Beschreibung

Die Erfindung betrifft Baugruppe für einen Brennstoffzellenstapel, umfassend eine Polarplatte und eine Dichtung. Ferner umfasst die Erfindung einen Brennstoffzellenstapel umfassend die Baugruppe und ein Verfahren zur Herstellung der Baugruppe.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Anordnung (MEA für membrane electrode assembly), die ein Gefüge aus einer ionenleitenden (meist protonenleitenden) Membran und jeweils einer beidseitig an der Membran angeordneten katalytischen Elektrode (Anode und Kathode) ist. Letztere umfassen zumeist geträgerte Edelmetalle, insbesondere Platin. Zudem können Gasdiffusionslagen (GDL) beidseitig der Membran-Elektroden-Anordnung an den der Membran abgewandten Seiten der Elektroden angeordnet sein. In der Regel wird die Brennstoffzelle durch eine Vielzahl im Stapel (Brennstoffzellenstapel) angeordneter MEAs gebildet, deren elektrische Leistungen sich addieren. Zwischen den einzelnen Membran-Elektroden-Anordnungen sind in der Regel Bipolarplatten (auch Flussfeld- oder Separatorplatten genannt) angeordnet, welche eine Versorgung der Einzelzellen mit den Betriebsmedien, also den Reaktanten, sicherstellen und üblicherweise auch der Kühlung dienen. Zudem sorgen die Bipolarplatten für einen elektrisch leitfähigen Kontakt zu den Membran-Elektroden-Anordnungen. An den Stapelrändern des Brennstoffzellenstapels sind anstatt der Bipolarplatten Monopolarplatten angeordnet, wobei Bipolarplatten beidseitig und Monopolarplatten einseitig ein Flussfeld für die Reaktanten aufweisen. Bipolarplatten und Monopolarplatten werden unter dem Begriff Polarplatten zusammengefasst.

Im Betrieb der Brennstoffzelle wird der Brennstoff (Anodenbetriebsmedium), insbesondere Wasserstoff H₂ oder ein wasserstoffhaltiges Gasgemisch, über ein anodenseitiges offenes Flussfeld der Bipolarplatte der Anode zugeführt, wo eine elektrochemische Oxidation von H₂ zu Protonen H⁺ unter Abgabe von Elektronen stattfindet (H₂ → 2 H⁺ + 2 e⁻). Über den Elektrolyten oder die Membran, welche die Reaktionsräume gasdicht voneinander trennt und elektrisch isoliert, erfolgt ein (wassergebundener oder wasserfreier) Transport der Protonen aus dem Anodenraum in den Kathodenraum. Die an der Anode bereitgestellten Elektronen werden über eine elektrische Leitung der Kathode zugeleitet. Der Kathode wird über ein kathodenseitiges offenes Flussfeld der Bipolarplatte Sauerstoff oder ein sauerstoffhaltiges Gasgemisch (zum Beispiel Luft) als Kathodenbetriebsmedium zugeführt, sodass eine Reduktion von O₂ zu O²⁻ unter Aufnahme der Elektronen stattfindet (½ O₂ + 2 e⁻ → O²⁻). Gleichzeitig reagieren im Kathodenraum die Sauerstoffanionen mit den über die Membran transportierten Protonen unter Bildung von Wasser (O²⁻ + 2 H⁺ → H₂O).

Die Versorgung des Brennstoffzellenstapels mit seinen Betriebsmedien, also dem Anodenbetriebsgas (zum Beispiel Wasserstoff), dem Kathodenbetriebsgas (zum Beispiel Luft) und dem Kühlmittel, erfolgt über Betriebsmittelkanäle, die den Stapel in seiner gesamten Stapelrichtung durchsetzen und von denen die Betriebsmedien über die Bipolarplatten den Einzelzellen zugeführt werden. Für jedes Betriebsmedium sind mindestens zwei solcher Betriebsmittelkanäle (Hauptversorgungkanäle) vorhanden, nämlich einer zur Zuführung und einer zur Abführung des jeweiligen Betriebsmediums.

Es ist bekannt, Dichtungen einer Einzelzelle eines Brennstoffzellenstapels direkt auf eine Membran-Elektroden-Anordnung oder eine Polarplatte des Brennstoffzellenstapels mittels eines Spritzgussverfahrens anzuspritzen.

Dabei kann die Dichtung an einen Rahmen der Membran-Elektroden-Anordnung angespritzt werden. Wegen des Rahmens fällt allerdings eine große Menge an Kunststoff-Müll an. Ferner wird nur eine schlechte Ausnutzung der mit dem Katalysator beschichteten Membran (englisch: catalyst coated membrane, CCM) erreicht, was die Kosten erhöht. Ferner ist bekannt, die Dichtung auf bündig geschnittene Membran-Elektroden-Anordnungen anzuspritzen. Diese weisen jedoch biegeweiche Ränder auf, welche eine Positionierung beim Zusammenbau des Brennstoffzellenstapels, insbesondere bei hohen Stückzahlen, erschweren.

Wird die Dichtung direkt an die Polarplatte angespritzt, bewirkt dies eine hohe Belastung der relativ dünnen Platte. Das Anspritzen erfordert somit relativ komplexe Spritzgusswerkzeuge und tendenziell dickere Platten.

Somit scheint das Anspritzen der Dichtungen nicht mit den relativ dünnen Polarplatten kompatibel zu sein, welche für Anwendungen mit relativ hohen Leistungsdichten benötigt werden. Dies wurde bisher dadurch berücksichtigt, indem die Dichtung an die Membran-Elektroden-Anordnung angespritzt wurde. Dies ist möglich, da die Membran-Elektroden-Anordnung relativ nachgiebig ist, sodass die Belastungen aufgenommen werden können. Die daraus resultierenden Bauteile sind jedoch schwer zu handhaben und zusammenzubauen. Die Dichtungen können auch an einer laminierten Membran-Elektroden-Anordnungs-Baugruppe angespritzt werden. Allerdings ist es sehr schwierig, symmetrisch doppelseitig geformte Dichtungen bei geringem Ausschuss anzubringen.

DE 10 2015 015 392 A1 offenbart eine Bipolarplatten-Anordnung für einen Brennstoffzellenstapel. Wenigstens ein Dichtelement ist auf wenigstens eine Seite der Bipolarplatten-Anordnung aufgebracht. Wenigstens eine der beiden Platten umfasst ein Verriegelungselement, welches dazu ausgebildet ist, das wenigstens eine Dichtelement an der Platte zu fixieren. In einem Bereich, welcher das Verriegelungselement umfasst, ist ein Teil des wenigstens einen Dichtelements in einem Zwischenraum zwischen den beiden Platten angeordnet. Das Material des Dichtelements wird mittels Spritzgießens auf die Platte aufgebracht.

Auch die Druckschrift DE 10 2015 004 803 A1 offenbart ein Aufbringen einer Dichtung auf einer Oberflächenseite eines Bipolarplattenrohlings mittels Spritzgießens. Die Dichtung umschließt einen Ein- und/oder Auslassbereich vollständig.

US 2015/0357656 A1 offenbart eine Brennstoffzelle, umfassend eine Polarplatte, eine Membran-Elektroden-Anordnung und einen Folienrahmen, welcher mit der Polarplatte mittels eines Klebstofffilms verbunden ist. Dabei ist ein äußerer Randbereich der Membran-Elektroden-Anordnung zwischen dem Folienrahmen und der Polarplatte angeordnet.

Aus JP 2007-066766 A ist eine Brennstoffzelle bekannt, umfassend eine Polarplatte, eine Membran-Elektroden-Anordnung und einen als massives profiliertes Element ausgebildeten Rahmen, der die Membran-Elektroden-Anordnung einfasst und mittels einer klebenden Schicht mit der Polarplatte verbunden ist. Auf dem Rahmen ist eine Dichtung ausgebildet.

US 2015/0030960 A1 offenbart eine Brennstoffzelle, umfassend eine Polarplatte, eine Membran-Elektroden-Anordnung und einen Rahmen, welcher mit der Polarplatte über eine haftklebende Dichtung stoffschlüssig verbunden ist.
Der Erfindung liegt nun die Aufgabe zugrunde, eine Lösung vorzuschlagen, um die Herstellung und den Zusammenbau eines Brennstoffzellenstapels zu vereinfachen.

Diese Aufgabe wird durch eine Baugruppe mit den Merkmalen des unabhängigen Anspruchs gelöst.

Erfindungsgemäß wird eine Baugruppe für einen Brennstoffzellenstapel zur Verfügung gestellt. Die Baugruppe umfasst eine Polarplatte und einen Rahmen, welcher mit der Polarplatte stoffschlüssig verbunden ist, wobei der Rahmen auf einer der Polarplatte abgewandten Seite wenigstens eine mit dem Rahmen verbundene Dichtung aufweist. Ferner umfasst die Baugruppe eine Membran-Elektroden-Anordnung, die eine Membran, beidseitig daran angeordnete Katalysatoren und beidseitig an den Katalysatoren angeordnete Gasdiffusionslagen umfasst, wobei die Membran-Elektroden-Anordnung an der Polarplatte und/oder dem Rahmen fixiert ist und wobei ein äußerer Randbereich der Membran-Elektroden-Anordnung zumindest teilweise zwischen dem Rahmen und der Polarplatte angeordnet ist. Erfindungsgemäß weist die Polarplatte eine Vertiefung auf, wobei die Membran-Elektroden-Anordnung in der Vertiefung angeordnet ist.

Durch die Erfindung wird eine Polarplatte mit wenigstens einer Dichtung zur Verfügung gestellt, welche eine Serienfertigung von Brennstoffzellenstapeln, relativ dünne Polarplatte und eine hohe Membran-Elektroden-Anordnung-Ausnutzung ermöglicht. Dies ist möglich, da die Dichtung nicht direkt auf die Polarplatte angespritzt wird, sondern mittels des Rahmens auf die Polarplatte aufgebracht werden kann. Dadurch werden Spannungsspitzen der Polarplatte verhindert.

Vorzugsweise ist der Rahmen eine Kunststofffolie. Ferner ist der Rahmen bevorzugt elektrisch isolierend. Insbesondere ist der Rahmen eine Kunststofffolie. Der Rahmen kann auch als Film bezeichnet werden, insbesondere als ein Laminat-Film. Ein Material der Dichtung ist insbesondere Silikon, Ethylen-Propylen-Dien-Kautschuk (EPDM Ethylen-Propylen-Dien; M-Gruppe) oder ein anderes, für Brennstoffzellen geeignetes Dichtungsmaterial. Insbesondere weist der Rahmen ein anderes Material als die Dichtung auf, sodass die Materialien von Rahmen und Dichtung bezüglich der zu erfüllenden Aufgaben ausgewählt werden können. Die stoffschlüssige Verbindung ist insbesondere so ausgebildet, dass diese den Rahmen umlaufend dichtend mit der Polarplatte verbindet. Stoffschlüssige Verbindungen bezeichnen Verbindungen, bei denen die Verbindungspartner durch atomare oder molekulare Kräfte zusammengehalten werden. Die in dieser Anmeldung genannten stoffschlüssigen Verbindungen sind insbesondere Klebungen, wobei als ein Klebstoff der Klebungen insbesondere ein Thermoplast oder ein Epoxid dient.

Die Membran-Elektroden-Anordnung ist an der Polarplatte und/oder dem Rahmen fixiert. An der Polarplatte und/oder dem Rahmen "fixiert" bedeutet, an der Polarplatte und/oder dem Rahmen "gehalten". Somit werden Baugruppen geschaffen, welche besonders einfach zu einem Brennstoffzellenstapel zusammengebaut werden können, indem die Baugruppen gestapelt werden. Da die Membran-Elektroden-Anordnung an der Polarplatte und/oder dem Rahmen fixiert ist, wird auch beim Zusammenbau eine korrekte Positionierung der Membran-Elektroden-Anordnung zur Polarplatte und/oder dem Rahmen sichergestellt. Die Membran-Elektroden-Anordnung umfasst insbesondere eine Membran, vorzugsweise eine mit Katalysatoren beschichtete Membran (englisch: catalysator coated membrane, CCM). Zudem kann die Membran-Elektroden-Anordnung beidseitig der Membran angeordnete Gasdiffusionslagen umfassen. Die Gasdiffusionslagen können insbesondere mit der Membran stoffschlüssig verbunden sein.

Der Rahmen weist insbesondere lediglich einseitig eine Dichtung auf, sodass Probleme beim beidseitigen Herstellen der Dichtung vermieden werden.

Indem der äußere Randbereich der Membran-Elektroden-Anordnung zumindest teilweise zwischen dem Rahmen, insbesondere einem inneren Randbereich des Rahmens, und der Polarplatte angeordnet ist, wird die Membran-Elektroden-Anordnung formschlüssig an der Polarplatte fixiert.

Vorzugsweise ist die Membran-Elektroden-Anordnung an der Polarplatte fixiert, indem die Membran-Elektroden-Anordnung mit dem Rahmen und/oder der Polarplatte stoffschlüssig verbunden ist.

Gemäß einer bevorzugten Ausgestaltung der Erfindung ist vorgesehen, dass der Rahmen, insbesondere ein innerer Randbereich des Rahmens, mit der Membran-Elektroden-Anordnung, insbesondere einem äußeren Randbereich der Membran-Elektroden-Anordnung, umlaufend stoffschlüssig verbunden ist. Somit wird die Membran-Elektroden-Anordnung nicht nur an der Polarplatte fixiert, sondern auch eine umlaufende Abdichtung beider gegenüberliegender Seiten der Membran-Elektroden-Anordnung zueinander gewährleistet. Dazu ist vorzugsweise der Rahmen mit der Membran der Membran-Elektroden-Anordnung umlaufend stoffschlüssig verbunden.

Gemäß einer weiteren bevorzugten Ausgestaltung der Erfindung ist vorgesehen, dass die Membran-Elektroden-Anordnung, insbesondere ein äußerer Randbereich der Membran-Elektroden-Anordnung, mit der Polarplatte umlaufend stoffschlüssig verbunden ist. Dies stellt eine alternative oder zusätzliche Möglichkeit dar, um eine umlaufende Abdichtung beider gegenüberliegender Seiten der Membran-Elektroden-Anordnung zueinander zu gewährleisten.

Ferner wird ein Brennstoffzellenstapel umfassend die erfindungsgemäße Baugruppe zur Verfügung gestellt. Der Brennstoffzellenstapel umfasst insbesondere mehrere gestapelte, erfindungsgemäße Baugruppen, wobei bevorzugt zwischen den Baugruppen keine Zwischenschichten angeordnet sind. Mittels der leicht zu handhabenden Baugruppen ist der Brennstoffzellenstapel besonders einfach herstellbar.

Ferner wird ein Fahrzeug umfassend den erfindungsgemäßen Brennstoffzellenstapel zur Verfügung gestellt. Das Fahrzeug weist insbesondere einen Elektromotor zum Antrieb des Fahrzeugs auf, welcher mittels einer Brennstoffzelle des Brennstoffzellensystems mit elektrischer Energie versorgt wird. Das Fahrzeug kann somit auch als Brennstoffzellenfahrzeug bezeichnet werden.

Ferner wird ein erfindungsgemäßes Verfahren zum Herstellen einer erfindungsgemäßen Baugruppe zur Verfügung gestellt, wobei das Verfahren einen Schritt des Herstellens der Dichtung auf dem Rahmen (im Bereich des Rahmens) umfasst. Ferner umfasst das Verfahren einen anschließenden Schritt des stoffschlüssigen Verbindens des Rahmens mit der Polarplatte, derart, dass die Dichtung an einer der Polarplatte abgewandten Seite des Rahmens angeordnet ist.

Dadurch, dass die Folie die wenigstens eine Dichtung nur auf der Polarplatte abgewandten Seite des Rahmens, also eine einseitig angeordnete, insbesondere angespritzte Dichtung, aufweist, werden die Probleme beseitigt, welche entstehen, wenn versucht wird, den Druck beim Spritzgießen so anzupassen oder auszugleichen, dass die Dichtungen beidseitig angespritzt werden kann.

Vorzugsweise ist vorgesehen, dass das stoffschlüssige Verbinden mittels eines Klebstoffs erfolgt. Insbesondere werden der Rahmen oder die Polarplatte mit dem Klebstoff (vor)beschichtet. Bevorzugt ist der Rahmen ein selbstklebender Rahmen, insbesondere ein selbstklebender Folienrahmen. Ferner kann die Polarplatte mittels des Klebstoffs beschichtet werden, um die Herstellung der Dichtung auf dem Rahmen zu vereinfachen. Das Beschichten mit Klebstoff kann mittels Aufdruckens erfolgen.

Gemäß einer bevorzugten Ausgestaltung der Erfindung ist vorgesehen, dass das Herstellen der Dichtung mittels Anspritzens der Dichtung an den Rahmen realisiert ist. Somit können bereits bewährte Spritzgussverfahren zur Herstellung der Dichtung genutzt werden.

Bevorzugt ist vorgesehen, dass das Verfahren einen Schritt des Positionierens einer Membran-Elektroden-Anordnung auf der Polarplatte umfasst. Dabei oder anschließend kann die Membran-Elektroden-Anordnung auf der Polarplatte fixiert werden.

Vorzugsweise ist dazu vorgesehen, dass beim Schritt des stoffschlüssigen Verbindens des Rahmens mit der Polarplatte ein stoffschlüssiges Verbinden des Rahmens mit der Membran-Elektroden-Anordnung erfolgt. Somit ist eine insbesondere umlaufende Dichtung zwischen dem Rahmen und der Membran-Elektroden-Anordnung realisierbar.

Alternativ oder zudem umfasst das Verfahren bevorzugt einen Schritt des stoffschlüssigen Verbindens der Membran-Elektroden-Anordnung mit der Polarplatte. Somit ist eine umlaufende Dichtung zwischen der Polarplatte und der Membran-Elektroden-Anordnung realisierbar.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Brennstoffzellenstapel gemäß einer bevorzugten Ausgestaltung;
- Figur 2: einzelne Komponenten einer nicht erfindungsgemäßen Baugruppe;
- Figur 3: die Baugruppe gemäß Figur 2 im zusammengebauten Zustand;
- Figur 4: einzelne Komponenten einer ersten bevorzugten Ausgestaltung der Baugruppe;
- Figur 5: die Baugruppe gemäß Figur 4 im zusammengebauten Zustand;
- Figur 6: einzelne Komponenten einer zweiten bevorzugten Ausgestaltung der Baugruppe; und
- Figur 7: die Baugruppe gemäß Figur 6 im zusammengebauten Zustand.

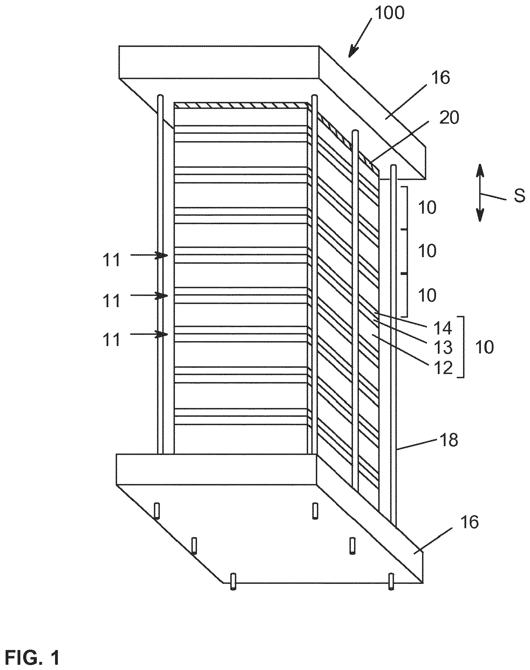

Figur 1 zeigt in einer schematischen Darstellung einen insgesamt mit 100 bezeichneten Brennstoffzellenstapel gemäß einer bevorzugten Ausgestaltung. Der Brennstoffzellenstapel 100 kann Teil eines nicht weiter dargestellten Fahrzeugs, insbesondere eines Elektrofahrzeugs, sein, das einen Elektrotraktionsmotor aufweist, der durch den Brennstoffzellenstapel 100 mit elektrischer Energie versorgt wird.

Der Brennstoffzellenstapel 100 umfasst eine Vielzahl von abwechselnd, an deren Flachseiten aneinandergereihten (gestapelten) Baugruppen 10. Die Baugruppen 10 umfassen jeweils eine Polarplatte 12 und wenigstens eine Dichtung 14. Ferner können die Baugruppen jeweils eine Membran-Elektroden-Anordnung (in dieser Darstellung nicht ersichtlich) umfassen. Insgesamt bilden also mehrere gestapelte Baugruppen 10 beziehungsweise Einzelzellen 11 den Brennstoffzellenstapel 100, wobei sowohl eine der Einzelzellen 11, als auch der Brennstoffzellenstapel 100 allgemein als Brennstoffzelle bezeichnet werden können.

Die Polarplatten 12 können als Bipolarplatten ausgebildet sein, sofern sie zwischen Membran-Elektroden-Anordnungen 22 angeordnet sind. Die zwei Polarplatten 12, welche Endplatten 16 des Brennstoffzellenstapels 100 am nächsten angeordnet sind, werden Monopolarplatten genannt. Zwischen den Polarplatten 12 und den jeweiligen Membran-Elektroden-Anordnungen sind nicht dargestellte Anoden- und Kathodenräume angeordnet, welche von den umlaufenden Dichtungen 14 begrenzt werden. Unter anderem, um die Dichtfunktion der Dichtungen 14 herzustellen, wird der Brennstoffzellenstapel 100 in der Stapelrichtung S mittels Spannvorrichtungen 18 zusammengepresst (verpresst). Dazu leiten die Spannvorrichtungen 18 Zugkräfte zwischen den beiden Endplatten 16 weiter, sodass die Endplatten 16 mittels der Spannvorrichtungen 18 zueinander gezogen werden. Dazu erstrecken sich die Spannvorrichtungen 18 in einer Stapelrichtung S des Brennstoffzellenstapels 100. Ferner umfasst der Brennstoffzellenstapel 100 zwei Stromsammler 20.

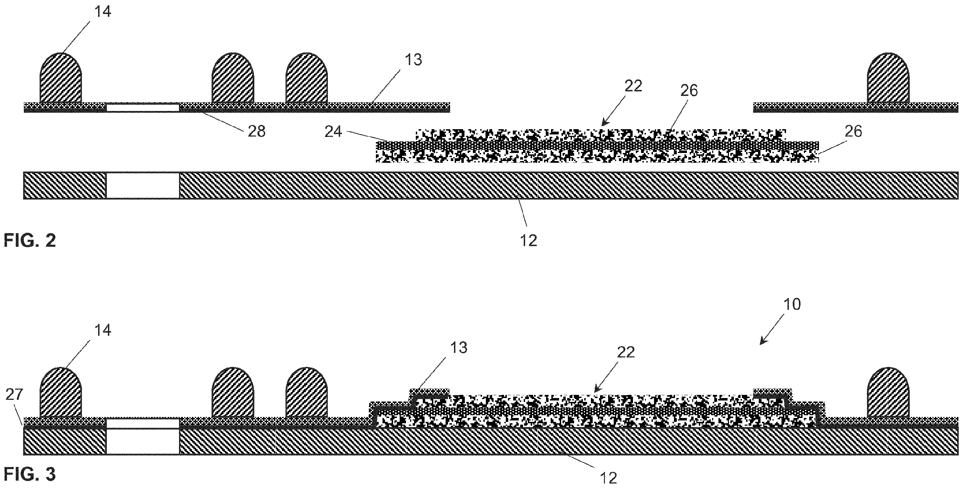

Figur 2 zeigt einzelne Komponenten einer Baugruppe 10 gemäß einer nicht erfindungsgemäßen Ausgestaltung. Die Baugruppe 10 umfasst als einzelne Komponenten eine Polarplatte 12, beispielsweise eine Bipolarplatte oder eine Monopolarplatte. Ferner umfasst die Baugruppe einen Rahmen 13, welcher ein Laminatfilm sein kann. Mit dem Rahmen 13 sind Dichtungen 14 oder auch nur eine (gemeinsame) Dichtung 14 verbunden. Im Folgenden werden die Begriffe "Dichtung" und "Dichtungen" synonym verwendet. Die Baugruppe 10 kann zudem eine Membran-Elektroden-Anordnung 22 umfassen, welche eine Membran 24 und beidseitig der Membran 24 angeordnete Katalysatoren (nicht explizit dargestellt) aufweist. Die Membran 24 kann als eine mit Katalysatoren beschichtete Membran 24 (englisch: catalyst coated membrane, CCM) ausgebildet sein. Ferner kann die Membran-Elektroden-Anordnung 22 beidseitig der Membran 24 angeordnete Gasdiffusionslagen 26 aufweisen. Die Gasdiffusionslagen 26 können mit der Membran 24 verklebt sein.

Die Dichtungen 14 können beispielsweise aus Silikon oder Ethylen-Propylen-Dien-Kautschuk (Ethylen-Propylen-Dien; M-Gruppe, EPDM) hergestellt sein.

Zum Herstellen der Baugruppe 10 wird zunächst die wenigstens eine Dichtung 14 mittels Anspritzens der Dichtung 14 an den Rahmen 13 realisiert. Dies erfolgt typischerweise in einem Spritzgusswerkezeug in einem Spritzgussprozess (englisch: Liquid Injection Molding, LIM). Die wenigstens eine Dichtung 14 kann eine einzige oder mehrere separate Dichtungen umfassen. Da die Dichtung 14 lediglich an einer einzigen Seite des Rahmens 13 angespritzt (angeformt) wird, wird der Gussprozess vereinfacht.

Die Membran-Elektroden-Anordnung 22, welche die Membran 24 und die der Polarplatte 12 zugewandte Gasdiffusionslage 26 umfasst, wird auf der Polarplatte 12 platziert. Die Membran 24 und die Gasdiffusionslage 26 können bereits verklebt sein. Die der Polarplatte 12 abgewandte Gasdiffusionslage 26 ist (umlaufend) etwas kleiner ausgeführt als die andere Gasdiffusionslage 26 und wird auf der Membran 24 platziert. Alternativ könnten auch beide Gasdiffusionslagen 26 mit der Membran 24 vorverklebt sein. Die der Polarplatte 12 zugewandte Seite der Membran 24 kann die Anodenseite sein, während die andere Seite der Membran 24 die Kathodenseite bildet (oder umgekehrt).

Erst nach dem Herstellen der Dichtung 14 auf dem Rahmen 13 erfolgt ein stoffschlüssiges Verbinden des Rahmens 13 mit der Polarplatte 12 und zwar derart, dass die Dichtung 14 an einer der Polarplatte 12 abgewandten Seite des Rahmens 13 angeordnet ist.

Gemäß der in den Figuren 2 und 3 dargestellten Ausgestaltung kann der Rahmen 13 dazu mit einem Klebstoff 28 vor oder nach dem Herstellen der Dichtung 14 vorbeschichtet worden sein. Der Klebstoff 28 kann ein thermoplastischer Klebstoff sein. Der thermoplastische Klebstoff kann ein Polyvinylidenfluorid (PVDF) umfassen. Ein solches ist zum Beispiel unter dem Markennamen Kynar der Firma Arkema bekannt.

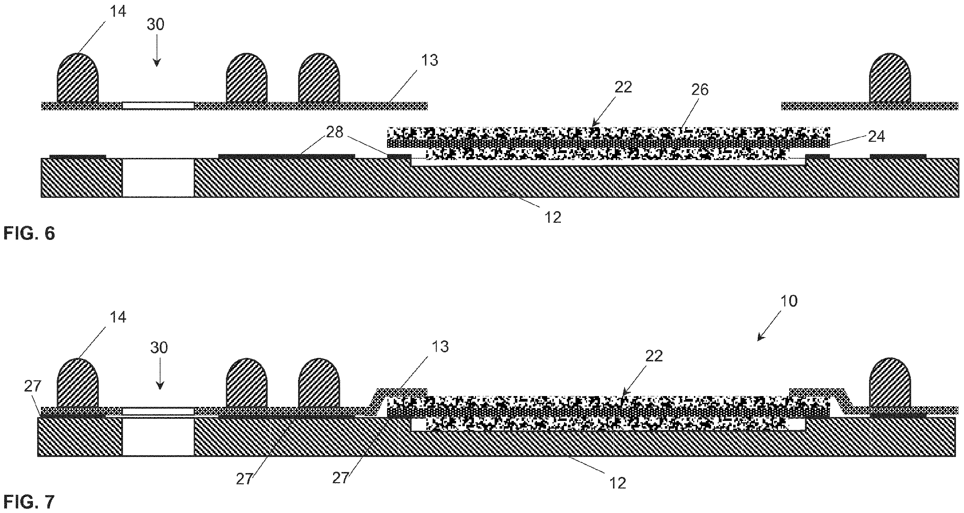

Zum stoffschlüssigen Verbinden wird der Rahmen 13 mitsamt der Dichtung 14 auf der Polarplatte 12 und der Membran-Elektroden-Anordnung 22 aufgelegt oder aufgepresst und erwärmt, wodurch sich der thermoplastische Klebstoff mit der Polarplatte 12 verbindet. Der Klebstoff 28 stellt eine umlaufende stoffschlüssige Verbindung (27, s. Fig. 7) zwischen dem Rahmen 13 auf der einen Seite und der Polarplatte 12 sowie der Membran 24 auf der anderen Seite her. Dabei dichtet der Klebstoff 28 den Rahmen 13 zu der der Polarplatte 12 abgewandten Seite der Membran 24 hin umlaufend ab und fixiert die Membran-Elektroden-Anordnung 22. Auch die der Polarplatte 12 abgewandte Gasdiffusionslage 26 wird durch den Klebstoff 28 fixiert.

In Figur 3 ist ersichtlich, dass dadurch eine Baugruppe 10 für einen Brennstoffzellenstapel 100 realisiert wird, welche die Polarplatte 12 und den Rahmen 13 umfasst. Der Rahmen 13 ist mit der Polarplatte 12 stoffschlüssig verbunden und weist auf der der Polarplatte 12 abgewandten Seite wenigstens eine mit dem Rahmen 13 verbundene Dichtung 14 auf. Zudem weist die Baugruppe 10 die Membran-Elektroden-Anordnung 22 auf, welche an der Polarplatte 12 fixiert ist, wobei ein äußerer Randbereich der Membran-Elektroden-Anordnung 22 zumindest teilweise zwischen einem inneren Randbereich des Rahmens 13 und der Polarplatte 12 angeordnet ist. Der innere Randbereich des Rahmens 13 ist mit dem äußeren Randbereich der Membran-Elektroden-Anordnung 22 mittels des Klebstoffs 28 umlaufend stoffschlüssig verbunden.

Die Dichtung(en) 14 sind also an einem günstig herstellbaren Träger, dem Rahmen 13, angeordnet, welcher dazu dient, die Dichtung 14 auf die Polarplatte 12 zu kleben. Daraus resultieren nur relativ geringe Belastungen der Polarplatte 12.

Ferner kann der Rahmen 13 dazu dienen, die Membran-Elektroden-Anordnung 22 mit der Polarplatte 12 zu einer Baugruppe 10 zu vereinen. Dazu können die einzelnen Komponenten der Membran-Elektroden-Anordnung 22 direkt nach dem Schneiden zur Polarplatte 12 ausgerichtet werden, wodurch eine optimale Ausrichtung und somit geringstmöglicher Ausschuss realisiert werden. Die Polarplatte 12 kann selbst mehrere Einzelplatten (nicht dargestellt) aufweisen. Durch die vereinte Baugruppe 10 ist der Zusammenbau des Brennstoffzellenstapels 100 besonders einfach möglich. Zudem wird eine hohe Ausnutzung des Materials der Membran-Elektroden-Anordnung, insbesondere des Materials der mit Katalysatoren beschichteten Membran 24 erreicht.

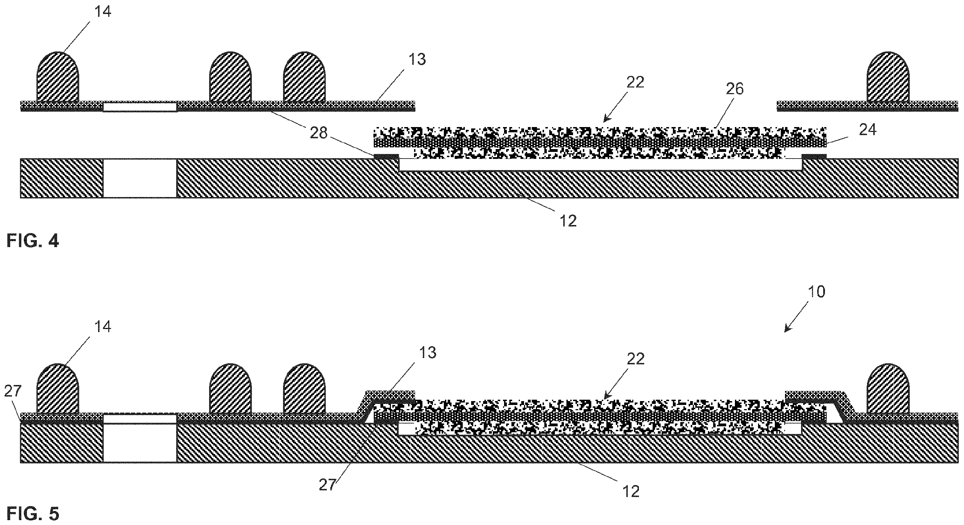

Figur 4 zeigt einzelne Komponenten einer ersten erfindungsgemäßen Ausgestaltung der Baugruppe 10, während Figur 5 die Baugruppe 10 im fertig hergestellten Zustand zeigt. Die gezeigte Ausgestaltung entspricht jener der in den Figuren 2 und 3 gezeigten Ausgestaltung bis auf die folgend genannten Punkte. Mittels dieser Ausgestaltung wird eine potentielle verbesserte Ausnutzung eines Materials der Membran 24 (der CCM) ermöglicht.

Zunächst wird eine zusätzliche Schicht Klebstoff 28 auf die Polarplatte 12 aufgebracht, beispielsweise aufgedruckt. Der Klebstoff 28 kann ein thermoplastischer Klebstoff oder ein Epoxid(-harz) sein. Diese Klebstoffe sind prinzipiell für alle genannten Ausführungsformen geeignet. Anschließend wird eine Gasdiffusionslage 26 mit umlaufend etwas kleineren Abmaßen auf der Polarplatte 12, insbesondere in einer Vertiefung der Polarplatte 12, positioniert. Auch die in Figur 3 gezeigte Membran-Elektroden-Anordnung 22 kann in einer Vertiefung der Polarplatte 12 angeordnet sein, sodass die Membran 24 bündig auf der Polarplatte 12 aufliegt. Die Gasdiffusionslage 26 ist dabei innerhalb einer Begrenzung des auf der Polarplatte 12 aufgebrachten Klebstoffs 28 angeordnet. Eine verglichen mit der bereits positionierten Gasdiffusionslage 26 umlaufend überstehende, weil größere Membran 24 (CCM) und die zweite Gasdiffusionslage 26 werden anschließend auf der Polarplatte 12 positioniert. Die Membran 24 und die zweite Gasdiffusionslage 26 können vorverklebt sein. Ebenso könnte die gesamte Membran-Elektroden-Anordnung 22 umfassend beide Gasdiffusionslagen 26 und die Membran 24 vorverklebt sein, sodass nur die Membran-Elektroden-Anordnung 22 als Gesamtes auf der Polarplatte 12 positioniert werden muss.

Abweichend von der Herstellung der zuvor genannten Ausgestaltung wird nun die Membran-Elektroden-Anordnung 22 mit der Polarplatte 12 umlaufend stoffschlüssig verbunden. Der Klebstoff 28 bewirkt somit eine umlaufend stoffschlüssige Verbindung (27) und somit Dichtung zwischen dem äußeren Randbereich der Membran 24 der Membran-Elektroden-Anordnung 22 und der Polarplatte 12. Anschließend oder gleichzeitig wird der Rahmen 13, welcher wieder mit dem Klebstoff 28 versehen ist, oder die gesamte Baugruppe 10 erwärmt, und der thermoplastische Klebstoff 28 bewirkt eine formschlüssige Verbindung zwischen dem Rahmen 13 und der Polarplatte 12. Gleichzeitig wird der Rahmen 13 auch mit der der Polarplatte 12 abgewandten Gasdiffusionslage 26 verklebt, sodass die Gasdiffusionslage 26 und die Membran 24 an der Polarplatte 12 gehalten werden.

Im Gegensatz zur in den Figuren 2 und 3 gezeigten Ausgestaltung, wird der Rahmen nicht mit der Membran 24 verklebt. Es ist auch möglich, die zentrale Öffnung des Rahmens 13 so weit zu erweitern, dass der Rahmen 13 die der Polarplatte 12 abgewandte Gasdiffusionslage 26 nicht an der Polarplatte 12 hält. Mittels der stoffschlüssigen Verbindung 27 zwischen der Membran 24 und der Polarplatte 12, sowie zwischen der Membran 24 und der der Polarplatte 12 abgewandten Gasdiffusionslage 26 wird die Membran-Elektroden-Anordnung 22 dennoch an der Polarplatte 12 gehalten.

Figur 6 zeigt einzelne Komponenten einer zweiten erfindungsgemäßen Ausgestaltung der Baugruppe 10, während Figur 7 die Baugruppe 10 in zusammengebauten Zustand zeigt. Die gezeigte Ausgestaltung entspricht jener der in den Figuren 4 und 5 gezeigten Ausgestaltung bis auf die folgend genannten Unterschiede.

In beiden zuvor gezeigten Ausgestaltungen wird die Dichtung 14 auf den mit dem thermoplastischen Klebstoff 28 beschichteten Rahmen 13 (einen Laminatfilm) angegossen. Dies erfordert entweder Gusstemperaturen welche niedriger als eine Schmelztemperatur des Klebstoffs 28 sind, oder dass eine Gussform (ein Spritzgusswerkzeug) für den schmelzenden und fließenden Klebstoff geeignet ist, zum Beispiel indem die Gussform den Klebstoff 28 einschließt.

Gemäß dieser Ausgestaltung wird einer der bereits genannten Klebstoffe 28 auf die Polarplatte 12 aufgebracht, zum Beispiel aufgedruckt. Der Klebstoff 28 wird dabei um zu dichtende Bereiche, wie zum Beispiel Betriebsmittelkanäle 30, welche zum Versorgen der Einzelzellen 11 mit Betriebsmedien dienen, und einen äußeren Randbereich der Polarplatte 12 aufgebracht. Ferner wird der Klebstoff 28, wie aus den Figuren 4 und 5 bekannt ist, umlaufend um eine Vertiefung in der Polarplatte 12 (an einem späteren Umfang der Membran-Elektroden-Anordnung 22) aufgebracht, in welche die der Polarplatte 12 zugewandte Gasdiffusionslage 26 eingesetzt wird.

Dadurch können die Dichtungen 14 auf wiederum an den Rahmen 13 angegossen (angespritzt) werden, welcher als einzige Komponente lediglich einen Kunststoff-Film (eine Kunststofffolie) aufweist. Dies ist potentiell einfacher zu realisieren als ein direktes Anspritzen der Dichtungen 14 an die Polarplatte 12. Der Rahmen 13 mitsamt der Dichtungen 14 wird dann mit der Polarplatte 12 stoffschlüssig verbunden (geklebt). Die Membran-Elektroden-Anordnung 22 wird ebenfalls mittels des Klebstoffs 28 mit der Polarplatte 12 stoffschlüssig verbunden.

Ein Fenster in dem Rahmen 13, welches dazu dient, einen aktiven Bereich der Membran-Elektroden-Anordnung 22 nicht zu verdecken, kann so dimensioniert sein, dass die der Polarplatte 12 abgewandte Gasdiffusionslage 26 an der Polarplatte 12 gehalten (fixiert) wird (siehe Figur 7). Wie bereits bezüglich der direkt vorangegangenen Ausführungsform der Figuren 4 und 5 erwähnt, kann das Fenster aber auch soweit vergrößert sein, dass der Rahmen etwas außerhalb der der Polarplatte 12 abgewandten Gasdiffusionslage 26 endet.

Insgesamt wird es durch die Erfindung ermöglicht, dass relativ dünne, Bauteile für hohe Leistungsdichten gleichzeitig für eine Serienfertigung mit hohen Stückzahlen geeignet sind.

Im Übrigen kann man die Lösungen der Ausführungsformen miteinander kombinieren.

### Bezugszeichenliste

- 10: Baugruppe
- 11: Einzelzelle
- 12: Polarplatte
- 13: Rahmen
- 14: Dichtung
- 16: Endplatte
- 18: Spannvorrichtung
- 20: Stromsammler
- 22: Membran-Elektroden-Anordnung
- 24: Membran / Katalysator beschichtete Membran
- 26: Gasdiffusionslage
- 27: stoffschlüssige Verbindung
- 28: Klebstoff
- 30: Betriebsmittelkanal
- 100: Brennstoffzellenstapel

## Patentansprüche

1. Baugruppe (10) für einen Brennstoffzellenstapel (100), umfassend:
eine Polarplatte (12),
einen Rahmen (13), welcher mit der Polarplatte (12) stoffschlüssig verbunden ist, wobei der Rahmen (13) auf einer der Polarplatte (12) abgewandten Seite wenigstens eine mit dem Rahmen (13) verbundene Dichtung (14) aufweist, und
eine Membran-Elektroden-Anordnung (22), umfassend eine Membran (24), beidseitig daran angeordnete Katalysatoren und beidseitig an den Katalysatoren angeordnete Gasdiffusionslagen (26), wobei die Membran-Elektroden-Anordnung (22) an der Polarplatte (12) und/oder dem Rahmen (13) fixiert ist und wobei ein äußerer Randbereich der Membran-Elektroden-Anordnung (22) zumindest teilweise zwischen dem Rahmen (13) und der Polarplatte (12) angeordnet ist,
**dadurch gekennzeichnet, dass**
die Polarplatte (12) eine Vertiefung aufweist und die Membran-Elektroden-Anordnung (22) so in der Vertiefung angeordnet ist, dass die Membran (24) eben auf der Polarplatte (12) aufliegt.

2. Baugruppe (10) nach Anspruch 1, **dadurch gekennzeichnet, dass** der Rahmen (13) mit der Membran-Elektroden-Anordnung (22) umlaufend stoffschlüssig verbunden ist.

3. Baugruppe (10) nach einem der vorhergehenden Ansprüche, **dadurch gekennzeichnet, dass** die Membran-Elektroden-Anordnung (22) mit der Polarplatte (12) umlaufend stoffschlüssig verbunden ist.

4. Baugruppe (10) nach einem der vorhergehenden Ansprüche, **dadurch gekennzeichnet, dass** der Rahmen (13) ein Folienrahmen ist.

5. Brennstoffzellenstapel (100) umfassend die Baugruppe (10) nach einem der vorhergehenden Ansprüche.

6. Verfahren zum Herstellen der Baugruppe (10) nach einem der Ansprüche 1 bis 4, wobei das Verfahren folgende Schritte umfasst:
- Herstellen der Dichtung (14) auf dem Rahmen (13), und
- Anschließend stoffschlüssiges Verbinden des Rahmens (13) mit der Polarplatte (12) derart, dass die Dichtung (14) an einer der Polarplatte (12) abgewandten Seite des Rahmens (13) angeordnet ist.

7. Verfahren nach Anspruch 6, **dadurch gekennzeichnet, dass** das stoffschlüssige Verbinden mittels eines Klebstoffs (28) erfolgt.

8. Verfahren nach Anspruch 6 oder 7, **dadurch gekennzeichnet, dass** das Herstellen der Dichtung (14) mittels Anspritzens der Dichtung (14) an den Rahmen (13) realisiert ist.

## Claims

1. Assembly (10) for a fuel cell stack (100), comprising:
a polar plate (12),
a frame (13) which is connected to the polar plate (12) by a material bond, wherein the frame (13) has, on a side facing away from the polar plate (12), at least one seal (14) connected to the frame (13), and
a membrane-electrode arrangement (22) comprising a membrane (24), catalytic converters arranged on both sides thereof and gas diffusion layers (26) on both sides of the catalytic converters, wherein the membrane-electrode arrangement (22) is fixed to the polar plate (12) and/or the frame (13) and wherein an outer edge region of the membrane-electrode arrangement (22) is arranged at least partially between the frame (13) and the polar plate (12),
**characterised in that**
the polar plate (12) has a recess, and the membrane-electrode arrangement (22) is arranged in the recess in such a way that the membrane (24) lies flat on the polar plate (12).

2. Assembly (10) according to claim 1, **characterised in that** the frame (13) is connected to the membrane-electrode arrangement (22) by a circumferential material bond.

3. Assembly (10) according to any of the preceding claims, **characterised in that** the membrane-electrode arrangement (22) is connected to the polar plate (12) by a circumferential material bond.

4. Assembly (10) according to any of the preceding claims, **characterised in that** the frame (13) is a foil frame.

5. Fuel cell stack (100) comprising the assembly (10) according to any of the preceding claims.

6. Method for producing the assembly (10) according to any of claims 1 to 4, wherein the method comprises the following steps:
- producing the seal (14) on the frame (13), and
- subsequently connecting the frame (13) to the polar plate (12) by a material bond in such a way that the seal (14) is arranged on a side of the frame (13) facing away from the polar plate (12).

7. Method according to claim 6, **characterised in that** the connection by a material bond is made by means of an adhesive (28).

8. Method according to claim 6 or 7, **characterised in that** the seal (14) is produced by moulding the seal (14) to the frame (13).

## Revendications

1. Ensemble (10) pour un empilement de piles à combustible (100), comprenant :
une plaque polaire (12),
un cadre (13), lequel est relié par liaison de matière à la plaque polaire (12), dans lequel le cadre (13) présente sur un côté opposé à la plaque polaire (12) au moins un joint d'étanchéité (14) relié au cadre (13), et
une unité membrane-électrodes (22) comprenant une membrane (24), des catalyseurs disposés sur celle-ci de part et d'autre et des couches de diffusion gazeuse (26) disposées sur les catalyseurs de part et d'autre, dans lequel l'unité membrane-électrodes (22) est fixée sur la plaque polaire (12) et/ou sur le cadre (13) et dans lequel une zone de bord extérieure de l'unité membrane-électrodes (22) est disposée au moins en partie entre le cadre (13) et la plaque polaire (12),
**caractérisé en ce que**
la plaque polaire (12) présente un renfoncement et l'unité membrane-électrodes (22) est disposée de telle sorte dans le renfoncement que la membrane (24) repose de manière plane sur la plaque polaire (12).

2. Ensemble (10) selon la revendication 1, **caractérisé en ce que** le cadre (13) est relié par liaison de matière en périphérie à l'unité membrane-électrodes (22).

3. Ensemble (10) selon l'une quelconque des revendications précédentes, **caractérisé en ce que** l'unité membrane-électrodes (22) est reliée par liaison de matière en périphérie à la plaque polaire (12).

4. Ensemble (10) selon l'une quelconque des revendications précédentes, **caractérisé en ce que** le cadre (13) est un cadre de film.

5. Empilement de piles à combustible (100) comprenant l'ensemble (10) selon l'une quelconque des revendications précédentes.

6. Procédé pour fabriquer l'ensemble (10) selon l'une quelconque des revendications 1 à 4, dans lequel le procédé comprend des étapes suivantes :
- la fabrication du joint d'étanchéité (14) sur le cadre (13), et
- puis la liaison par liaison de matière du cadre (13) à la plaque polaire (12) de telle manière que le joint d'étanchéité (14) est disposé sur un côté, opposé à la plaque polaire (12), du cadre (13).

7. Procédé selon la revendication 6, **caractérisé en ce que** la liaison par liaison de matière est effectuée au moyen d'une colle (28).

8. Procédé selon la revendication 6 ou 7, **caractérisé en ce que** la fabrication du joint d'étanchéité (14) est réalisée au moyen d'une application par pulvérisation du joint d'étanchéité (14) sur le cadre (13).
